# EUROPÄISCHE PATENTSCHRIFT

(11) **EP 0 945 633 B1**
(45) Veröffentlichungstag und Bekanntmachung des Hinweises auf die Patenterteilung: **28.04.2004**
(21) Anmeldenummer: 98810262.0
(22) Anmeldetag: 25.03.1998
(51) Int. Cl.: F16C 9/02

(54) **Lager für eine Kurbelwelle sowie Verfahren zur Montage eines solchen Lagers**
Crankshaft bearing as well as assembling method of such a bearing
Palier pour vilbrequin ainsi que procédé de montage d'un tel palier

(43) Veröffentlichungstag der Anmeldung: 29.09.1999
(73) Patentinhaber: Wärtsilä Schweiz AG, 8401 Winterthur (CH)
(72) Erfinder: Sönnichsen, Samuel, 8405 Winterthur (CH)
(74) Vertreter: Sulzer Management AG

(56) Entgegenhaltungen:
- EP-A- 0 773 376
- WO-A-92/14940
- DE-A- 2 154 704
- DE-A- 4 342 041
- DE-A- 19 628 915
- FR-A- 2 290 277

## Beschreibung

Die Erfindung betrifft ein Lager für eine Kurbelwelle und ein Verfahren zur Montage eines solchen Lagers gemäss dem Oberbegriff des jeweiligen unbahängigen Patentanspruchs.

Ein Grossdieselmotor, wie er beispielsweise im Schiffsbau zum Einsatz kommt, umfasst im Prinzip drei grosse Gehäuseteile. Von unten nach oben betrachtet sind dies eine sogenannte Grundplatte (Grundkörper), ein Gehäuse, sowie ein Zylindermantel. Diese drei Gehäuseteile werden mit Hilfe von Zugankern miteinander verbunden. Die Lagerung für die Kurbelwelle befindet sich dabei in der Grundplatte.

Bei einem bekannten Lager für eine Kurbelwelle, wie es beispielsweise in der EP-A-0,773,376 beschrieben ist, befindet sich in der Grundplatte eine Lagerschale. Der Lagerdeckel ist seitlich mit Schenkeln versehen und wird bei der Montage von oben her an die Lagerschale herangeführt, bis die Schenkel des Lagerdeckels auf der Lagerschale in der Grundplatte aufstehen. Im Lagerdeckel selbst ist typischerweise keine Lagerschale angeordnet, stattdessen ist die Lagerfläche aus einer Schicht aus gegossenem Lagermetall (Weissmetall) gebildet. Die Schenkel des Lagerdeckels stützen sich auf der Lagerschale in der Grundplatte ab, weshalb die Lagerschale in der Grundplatte entsprechend dick ausgebildet sein muss und aus einem Material (z.B. Gussstahl) besteht, welches beim Befestigen des Lagerdeckels an der Grundplatte dem Anpressdruck der Schenkel gegen die Lagerschale standhält. Die Lauffläche der in die Grundplatte eingesetzten Lagerschale wird ebenfalls durch eine Schicht aus gegossenem Lagermetall (Weissmetall) gebildet. Solche Anordnungen sind insofern nachteilig, als die Lagerschalen durch ihre grosse Dicke von der herstellungstechnischen Seite qualitativ schlechter sind (Bindung zwischen Weissmetall und Grundkörper der Lagerschale).

Im übrigen können durch die im Betrieb auftretenden dynamischen Kräfte auch Beschädigungen der Lagerfläche im Lagerdeckel auftreten, sodass bei entsprechend starker Beschädigung der gesamte Lagerdeckel ausgetauscht werden muss. Dies ist aufwendig und teuer. In der EP-A-0,773,376 beschriebene Alternativlösungen betreffen daher solche Ausführungsbeispiele, bei denen auch im Lagerdeckel eine Lagerschale vorgesehen ist.

Gemäss der EP-A-0,773,376 besteht bei der Montage zwischen dem Lagerdeckel und den entsprechenden seitlichen Führungsflächen in der Grundplatte ein geringes Montagespiel. Der Lagerdeckel gleitet also entlang der Führungsflächen in der Grundplatte, bis er auf der Lagerschale in der Grundplatte aufsteht. Anschliessend wird der Lagerdeckel mit der Grundplatte verschraubt. Hierzu ist im oberen Endbereich des Schenkels eine Aussparung und oberhalb dieser Aussparung ein Flansch vorgesehen, durch welchen hindurch die Verschraubung des Lagerdeckels mit der Grundplatte erfolgt. Beim Verschrauben wird der Lagerdeckel derart verspannt, dass die Schenkel am unteren Ende nach aussen bewegt werden, wodurch das Montagespiel ausgeglichen und der Lagerdeckel gegen die seitlichen Führungsflächen der Grundplatte angepresst wird.

Anschliessend wird die Lagerfläche komplett ausgedreht, weil die gesamte Lagerfläche nach Möglichkeit rund sein soll, jedenfalls aber die Lagerfläche des Lagerdeckels gegenüber der Lagerfläche der Lagerschale nicht nach innen vorstehen darf. Andererseits soll die Lagerfläche des Lagerdeckels nach Möglichkeit auch nicht weit gegenüber der Lagerfläche der Lagerschale nach aussen zurückstehen, da sonst der hydrodynamische Druckaufbau verringert wird.

Beim Verbinden der drei genannten Gehäuseteile (Grundplatte, Gehäuse, Zylindermantel) mit Hilfe der Zuganker tritt nun noch folgendes Phänomen auf. Die Grundplatte spreizt sich aufgrund der mit Hilfe der Zuganker ausgeübten Zugkräfte um einige Zehntelmillimeter nach aussen, wodurch wieder ein seitliches Spiel zwischen dem Lagerdeckel und den Führungsflächen der Grundplatte ensteht. Ohne Einwirkung von Horizontalkräften auf den Lagerdeckel verschiebt sich jedoch der Lagerdeckel nicht, da er ja mit der Grundplatte verschraubt ist. Die im Betrieb auftretenden dynamischen Kräften hingegen können dazu führen, dass der Lagerdeckel im Rahmen dieses Spiels bewegt werden kann, und dass dann Kräfte beim Anschlagen des Lagerdeckels an den Führungsflächen ruckartig auf den Lagerdeckel, insbesondere auf die Lagerfläche im Lagerdeckel übertragen werden können. Dies kann eine Beschädigung des Lagerdeckels zur Folge haben oder jedenfalls die durchschnittliche Lebensdauer eines Lagerdeckels erheblich verringern.

Es ist daher eine Aufgabe der Erfindung, die vorstehend genannten Nachteile zu vermeiden und insbesondere ein Lager vorzuschlagen, bei welchem auch nach dem Verbinden der drei Gehäuseteile (Grundplatte, Gehäuse, Zylindermantel) kein seitliches Spiel zwischen dem Lagerdeckel und den entsprechenden seitlichen Flächen in der Grundplatte besteht. Darüberhinaus soll es auch möglich sein, vergleichsweise dünne Lagerschalen zu verwenden, da diese von der herstellungstechnischen Seite qualitativ besser sind. Gleichzeitig soll auch ein Verfahren vorgeschlagen werden, welches eine einfache Montage eines solchen Lagers ermöglicht.

Erfindungsgemäss wird daher ein Lager vorgeschlagen, wie es durch die Merkmale des entsprechenden unabhängigen Patentanspruchs charaktereisiert ist. Vorteilhafte Ausführungsbeispiele bzw. Weiterbildungen des erfindungsgemässen Lagers ergeben sich aus den Merkmalen der abhängigen Patentansprüche.

Bei dem erfindungsgemässen Lager sind im unmontierten Zustand die Schenkel des Lagerdeckels in denjenigen Endbereichen, welche der Grundplatte zugewandt sind, in Richtung auf die seitlichen Anlageflächen der Grundplatte zu vorgespannt, sodass im montierten Zustand die seitlichen Aussenflächen der Schenkel gegen die seitlichen Anlageflächen der Grundplatte angepresst sind.

Durch die Vorspannung bzw. die Anpressung der seitlichen Aussenflächen der Schenkel gegen die seitlichen Anlageflächen der Grundplatte wird erreicht, dass beim Verbinden der Gehäuseteile (Grundplatte, Gehäuse, Zylindermantel) ein seitliches Spiel zwischen Lagerdeckel und Grundplatte vermieden wird. Aufgrund der Vorspannung folgen nämlich bei einer geringfügigen Spreizung der Grundplatte die Aussenflächen der Schenkel des Lagerdeckels den sich nach aussen spreizenden seitlichen Anlageflächen der Grundplatte, sodass kein seitliches Spiel zwischen den seitlichen Aussenflächen des Lagerdeckels und den seitlichen Anlageflächen der Grundplatte entstehen kann und somit auch die oben erwähnten Folgen (z.B. Beschädigung des Lagerdeckels bei Krafteinwirkung) vermieden werden.

Bei einem Ausführungsbeispiel des erfindungsgemässen Lagers sind in denjenigen Endbereichen der Schenkel, welche der Grundplatte abgewandt sind, Aufnahmen zur Befestigung einer separaten Spannvorrichtung vorgesehen. Mit dieser Spannvorrichtung werden die Schenkel in diesen Endbereichen derart verspannt, dass sich die Schenkel in denjenigen Endbereichen, die der Grundplatte zugewandt sind, aufeinander zu bewegen und dadurch in Richtung auf die seitlichen Anlageflächen der Grundplatte zu vorgespannt werden. Auf diese Weise kann die gewünschte Vorspannung einfach und zuverlässig bewirkt werden.

Bei einem weiteren Ausführungsbeispiel weist die Grundplatte seitliche Führungsflächen auf, an die sich die seitlichen Anlageflächen anschliessen, gegen welche die seitlichen Aussenflächen der Schenkel des Lagerdeckels angepresst sind. Die Abmessungen von Lagerdeckel und Grundplatte sind so gewählt, dass im unverspannten Zustand der Abstand der seitlichen Aussenflächen der Schenkel des Lagerdeckels voneinander geringfügig kleiner ist als der Abstand der seitlichen Führungsflächen der Grundplatte voneinander, jedoch geringfügig grösser als der Abstand der seitlichen Anlageflächen voneinander. Dadurch kann der Lagerdeckel bei der Montage von oben her zunächst entlang der seitlichen Führungsflächen geführt werden, bis er von oben her an den seitlichen Anlageflächen aufsteht. Dann wird er - z.B. mit Hilfe der genannten Spannvorrichtung - verspannt, sodass die Schenkel zwischen die Anlageflächen hineingleiten können, bis der Lagerdeckel vollständig aufsitzt. Anschliessend wird die Spannvorrichtung wieder gelöst, wodurch die seitlichen Aussenflächen der Schenkel des Lagerdeckels nach aussen gegen die seitlichen Anlageflächen der Grundplatte gepresst werden. Dann erfolgt die Befestigung des Lagerdeckels an der Grundplatte (z.B. mittels Verschraubung). Es ist also eine einfache Montage möglich.

Ein weiteres Ausführungsbeispiel des erfindungsgemässen Lagers zeichnet sich dadurch aus, dass sowohl an denjenigen Enden der Schenkel, die der Grundplatte zugewandt sind, als auch an der Grundplatte Stützflächen ausgebildet sind, und dass die Stützflächen der Schenkel gegen die Stützflächen der Grundplatte angepresst sind. Dadurch wird eine sichere und vergleichsweise grossflächige Abstützung des Lagerdeckels gegen die Grundplatte ermöglicht. Da die Abstützung auf gesonderten Stützflächen erfolgt, kann sowohl die Lagerschale in der Grundplatte als auch eine allfällige Lagerschale im Lagerdeckel vergleichsweise dünn ausgeführt sein, was von der herstellungtechnischen Seite her günstig ist.

Bei einer speziellen Weiterbildung ist der Lagerdeckel mittels Schraubverbindungen mit der Grundplatte verbunden. Die Schraubverbindungen erstrecken sich dabei von denjenigen Enden der Schenkel, die der Grundplatte abgewandt sind, durch die Schenkel und durch die Stützflächen der Schenkel und der Grundplatte hindurch bis in die Grundplatte hinein. Auf diese Weise wird eine sichere Befestigung bewirkt, und vor allem sind die Schrauben nach dem Aufsetzen des Lagerdeckels für die Montage bzw. Demontage auch gut zugänglich.

Sowohl im Lagerdeckel als auch in der Grundplatte kann eine Lagerschale eingesetzt sein. Die Lagerschale kann jeweils gegen den Lagerdeckel bzw. gegen die Grundplatte vorgespannt sein. Bei montiertem Lager und bei den im Betrieb auftretenden dynamischen Lagerkräften können also die Lagerschalen nicht relativ zur Grundplatte bzw. dem Lagerdeckel verschoben werden, sie sind somit genau positioniert. Ausserdem sind die Lagerschalen gesichert, sodass beim Lösen der Schraubverbindung zwischen Lagerdeckel und Grundplatte und bei einem anschliessenden Anheben des Lagerdeckels (z.B. bei der Inspektion der Lagerschale) die Lagerschale nicht aus dem Lagerdeckel herausfallen kann.

Die bereits weiter oben angesprochenen Stützflächen am Lagerdeckel und an der Grundplatte können im wesentlichen horizontal verlaufen. Dadurch kann eine einfache und gute Übertragung der Anpresskräfte zwischen Lagerdeckel und Grundplatte erfolgen.

Erfindungsgemäss wird auch ein Dieselmotor vorgeschlagen, insbesondere ein Kreuzkopf-Dieselmotor, mit mindestens einem Lager, welches wie vorstehend beschrieben ausgebildet ist.

Was das Montageverfahren betrifft, so wird gemäss der Erfindung vorgeschlagen, dass vor dem Heranführen des Lagerdeckels entlang der seitlichen Anlageflächen die Schenkel des Lagerdeckels in ihren der Grundplatte zugewandten Endbereichen in Richtung aufeinander zu verspannt werden, sodass sie in der entgegengesetzten Richtung vorgespannt sind. Anschliessend wird der so verspannte Lagerdeckel vollständig an die Grundplatte herangeführt. Sodann wird die Verspannung der Schenkel wieder gelöst, sodass diese in ihren der Grundplatte zugewandten Endbereichen aufgrund der Vorspannung gegen die seitlichen Anlageflächen der Grundplatte angepresst werden. Anschliessend wird der Lagerdeckel mit der Grundplatte verbunden. Mit Hilfe dieses Verfahrens ist eine einfache Montage des Lagers möglich, und durch die Vorspannung wird erreicht, dass ein seitliches Spiel zwischen den seitlichen Aussenwänden des Lagerdeckels und den seitlichen Anlageflächen der Grundplatte vermieden wird, auch wenn beim Verbinden der drei Gehäuseteile (Grundplatte, Gehäuse, Zylindermantel) eine geringfügige Spreizung der Grundplatte auftritt.

Bei einer Ausführungsvariante des erfindungsgemässen Verfahrens wird zum Verspannen der Schenkel des Lagerdeckels eine separate Spannvorrichtung in den der Grundplatte abgewandten Endbereichen der Schenkel angebracht. Anschliessend werden mittels dieser Spannvorrichtung die Schenkel in diesen Endbereichen in Richtung voneinander weg verspannt, sie werden also in Richtung aufeinander zu vorgespannt. Dadurch werden die Schenkel in denjenigen Endbereichen, die der Grundplatte zugewandt sind, in Richtung aufeinander zu verspannt und somit in entgegengesetzter Richtung vorgespannt. Diese Variante ist insofern vorteilhaft, als die Verspannung auf einfache und vor allen Dingen bei der Montage gut zugängliche Art und Weise durchgeführt werden kann.

Bei einer weiteren Ausführungsvariante des Verfahrens sind die Abmessungen des Lagerdeckels und der Grundplatte so gewählt, dass beim Heranführen des Lagerdeckels von oben an die Grundplatte heran die seitlichen Aussenflächen der Schenkel zunächst an seitlichen Führungsflächen in der Grundplatte entlang geführt werden, bis die Schenkel von oben her gegen die enger bemessenen seitlichen Anlageflächen der Grundplatte anstossen. Anschliessend werden die Schenkel so lange verspannt (z.B. mittels der bereits angesprochenen Spannvorrichtung), bis sie entlang der seitlichen Anlageflächen der Grundplatte gleiten können, bis der Lagerdeckel vollständig an die Grundplatte herangeführt ist. Sodann wird die Verspannung der Schenkel wieder gelöst und schliesslich wird der Lagerdeckel mit der Grundplatte verbunden. Auf diese Weise ist eine einfache Montage möglich.

Bei einer weiteren Ausführungsvariante wird zunächst sowohl in die Grundplatte als auch in den Lagerdeckel eine Lagerschale eingesetzt. Die jeweilige Lagerschale wird gegen die Grundplatte bzw. gegen den Lagerdeckel vorgespannt. Dadurch bleibt die Positionierung der Lagerschale relativ zur Grundplatte bzw. zum Lagerdeckel stets erhalten. Weiterhin sind die Lagerschalen auch gesichert, sodass bei der Montage bzw. Demontage des Lagerdeckels (z.B. bei Inspektionen der Lagerschalen) die Lagerschale nicht herausfallen kann. Andererseits muss bei einer allfälligen Beschädigung jeweils nur die Lagerschale ausgetauscht werden, und nicht - wie teilweise bei früheren Lagern - der gesamte Lagerdeckel ersetzt werden.

Weitere vorteilhafte Ausgestaltungen ergeben sich aus der Beschreibung der Zeichnung. Dort zeigen, teilweise in schematischer und/oder in Schnittdarstellung:
- Fig. 1: ein Ausführungsbeispiel eines erfindungsgemässen Lagers für eine Kurbelwelle,
- Fig. 2: eine Aufsicht auf das Lager gemäss Fig. 1,
- Fig. 3: einen Schnitt gemäss der Linie III-III der Fig. 1,
- Fig. 4: einen Schnitt gemäss der Linie IV-IV der Fig. 1
- Fig. 5a: einen Ausschnitt aus einer Grundplatte mit eingesetzter, aber noch nicht vorgespannter Lagerschale,
- Fig. 5b: das Detail V der Fig. 1
- Fig. 6: das Detail IV der Fig. 1, in vergrösserter Darstellung,
- Fig. 7: einen Ausschnitt aus einem Schnitt entlang der Linie VII-VII der Fig. 1
und
- Fig. 8: einen Ausschnitt aus einem Schnitt entlang der Linie VIII-VIII der Fig. 1.

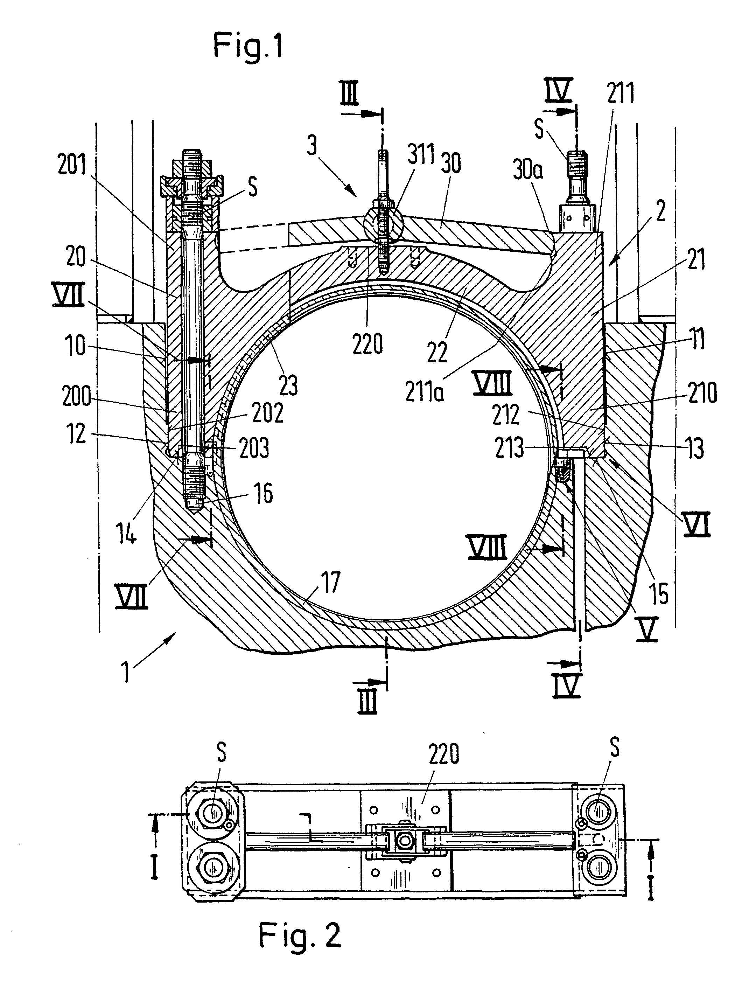

In Fig. 1 ist ein Ausführungsbeispiel eines erfindungsgemässen Lagers für eine Kurbelwelle in einer Schnittdarstellung zu erkennen. Anhand der Aufsicht in Fig. 2 erkennt man der Verlauf der Schnittlinie I-I, welche zu der Darstellung in Fig. 1 führt. Insbesondere erkennt man in Fig. 1 eine Grundplatte 1, einen Lagerdeckel 2, sowie eine separate Spannvorrichtung 3, welche auf dem Lagerdeckel 2 befestigt ist.

Der Lagerdeckel 2 umfasst zwei seitliche Schenkel 20 und 21, die mittels eines bogenförmig verlaufenden Stegs 22 miteinander vebunden sind und die zusammen mit dem Steg 22 den Lagerdeckel 2 bilden. Die beiden Schenkel 20 und 21 umfassen jeweils einen Endbereich 200 bzw. 210, welcher der Grundplatte 1 zugewandt ist, sowie einen Endbereich 201 bzw. 211, welcher der Grundplatte 1 abgewandt ist. In den Endbereichen 201 und 211 sind Aufnahmen 211 a vorgesehen für die Spannvorrichtung 3 bzw. für die Enden 30a der Schenkel 30 der Spannvorrichtung 3 (in der linken Hälfte ist das Ende des Schenkels nur gestrichelt dargestellt, weil eigentlich - wegen des Verlaufs der Schnittlinie - nicht zu sehen). Die Spannvorrichtung 3 selbst ist in einer Bohrung auf einem Plateau 220 auf dem bogenförmigen Steg 22 befestigt. Schliesslich erkennt man noch eine Lagerschale 23 im Lagerdeckel 2, welche im Lagerdeckel eingesetzt und gegen den Lagerdeckel vorgespannt ist.

Die Grundplatte 1 umfasst seitliche Führungsflächen 10 und 11, sowie an diese seitlichen Führungsflächen sich anschliessende seitliche (vertikale) Anlageflächen 12 und 13 für die seitlichen Aussenflächen 202 bzw 212 der Schenkel 20 und 21. Ferner sind noch horizontal angeordnete, ebene Stützflächen 14 und 15 an der Grundplatte 1 vorgesehen, gegen die entsprechende an den Schenkeln 20 und 21 des Lagerdeckels 2 vorgesehene Stützflächen 203 bzw. 213 anliegen. Lagerdeckel 2 und Grundplatte 1 sind mittels Schrauben S verbunden, die sich von den Endbereichen 201 bzw. 211 des Lagerdeckels durch dessen Schenkel 20 bzw. 21, durch die Stützflächen 203 bzw. 213, sowie durch die entsprechenden Stützflächen 14 und 15 der Grundplatte 1 hindurch bis in entsprechende Bohrungen in der Grundplatte 1 hinein - in Fig. 1 ist nur die Bohrung 16 zu erkennen - erstrecken. Ferner erkennt man noch die Lagerschale 17, welche in die Grundplatte 1 eingesetzt und gegen diese vorgespannt ist.

Der Abstand der seitlichen Aussenflächen 202 und 212 der Schenkel 20 und 21 voneinander ist im unverspannten Zustand geringfügig kleiner als der Abstand der seitlichen Führungsflächen 10 und 11 der Grundplatte 1 voneinander. Er ist jedoch geringfügig grösser als der Abstand der beiden seitlichen Anlageflächen 12 und 13 voneinander.

Bei der Montage des Lagerdeckels 2 ist es daher so, dass der Lagerdeckel 2 zunächst von oben her entlang der Führungsflächen 10 und 11 der Grundplatte 1 herangeführt wird, bis der Lagerdeckel 2 von oben her, aufgrund seines Übermasses, gegen die seitlichen Anlageflächen 12 bzw. 13 anstösst. Anschliessend werden mittels der Spannvorrichtung 3 die Endbereiche 201 und 211 der Schenkel 20 und 21 voneinander weg gespreizt, sie werden also in Richtung aufeinander zu vorgespannt. Dies hat zur Folge, dass die Endbereiche 200 und 210 aufeinander zu bewegt werden, also in Richtung voneinander weg vorgespannt werden. Die Bewegung der Endbereiche 200 und 210 aufeinander zu ermöglicht, dass die Schenkel 20 und 21 zwischen die seitlichen Anlageflächen 12 und 13 hineingleiten können, bis die Stützflächen 203 und 213 der Schenkel 20 bzw. 21 auf den Stützflächen 14 und 15 aufstehen, der Lagerdeckel 2 also vollständig an die Grundplatte 1 herangeführt ist. Anschliessend wird mittels der Spannvorrichtung 3 die erzeugte Vorspannung wieder gelöst, wodurch die Endbereiche 201 und 211 der Schenkel 20 und 21 aufgrund der Vorspannung sich wieder aufeinander zu bewegen und die Endbereiche 200 und 210 sich aufgrund der Vorspannung wieder voneinander weg bewegen, sodass sie gegen die seitlichen Anlageflächen 12 und 13 der Grundplatte 1 angepresst werden. Nun werden Lagerdeckel 2 und Grundplatte 1 mittels der Schrauben S miteinander verbunden. Anschliessend wird die Lagerfläche, also die Innenfläche der Lagerschalen 23 und 17 ausgedreht, um eine runde Lauffläche zu erhalten und um eine hydrodynamische Lagerung der Kurbelwelle zu ermöglichen.

Wenn nun nach der Montage des Lagers die Gehäuseteile (Grundplatte 1, Gehäuse - nicht dargestellt, Zylindermantel - nicht dargestellt) mittels Zuganker miteinenander verbunden werden, kann die Grundplatte 1 und somit auch die seitlichen Führungsflächen 10 und 11 und insbesondere auch die Anlageflächen 12 und 13 der Grundplatte 1 in Richtung geringfügig nach aussen gespreizt werden, also in Richtung voneinander weg. Dadurch könnte nun ein seitliches Spiel zwischen den seitlichen Aussenflächen 202 bzw. 212 der Schenkel 20 bzw. 21 des Lagerdeckels 2 und den entsprechenden Anlageflächen 12 bzw. 13 der Grundplatte 1 entstehen. Aufgrund der Vorspannung können jedoch die Endbereiche 200 und 210 der Schenkel 20 und 21 der Spreizung folgen, sie bleiben also trotz der möglicherweise auftretenden Spreizung bei der Verbindung der Gehäuseteile gegen die Anlageflächen 12 und 13 der Grundplatte 1 angepresst. Trotz dieser geringfügige Spreizung der Grundplatte 1 bleibt die Position der Lagerschale 23 im Lagerdeckel 2 gegenüber der Lagerschale 17 der Grundplatte 1 erhalten, weil die Schenkel 20 bzw. 21 des Lagerdeckel 2 aufgrund der Vorspannung der Spreizung der Grundplatte folgen können. Eine Spreizung der Grundplatte nach aussen behindert also die Bildung der hydrodynamischen Lagerung der Kurbelwelle nicht.

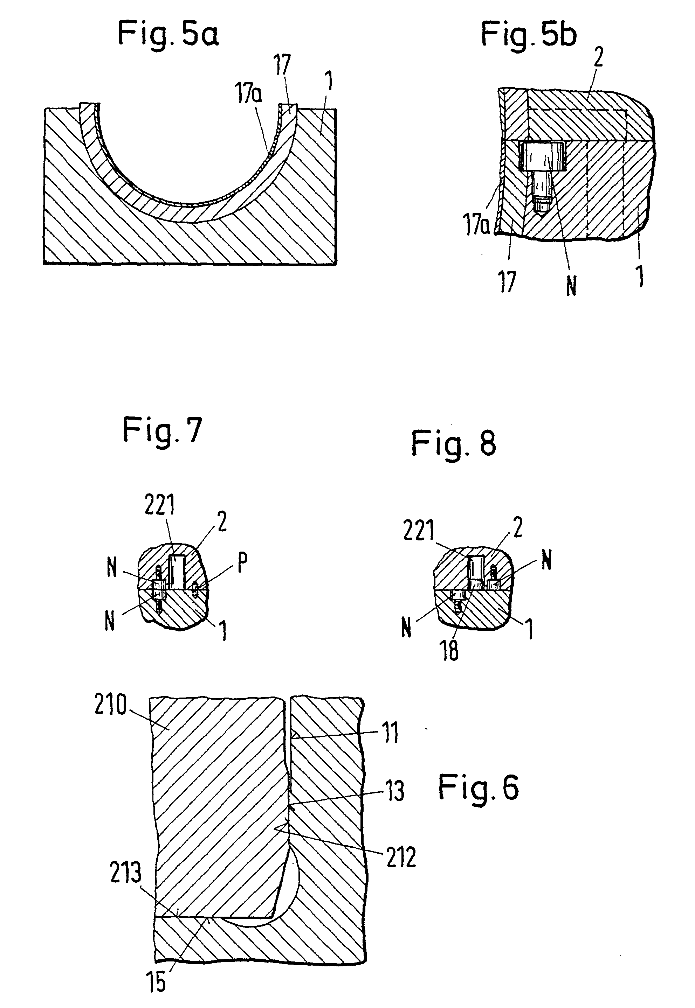

Der in Fig. 6 vergrössert dargestellte Detailausschnitt aus Fig. 1 zeigt, wie nach dem Einsetzen und dem Lösen der Spannvorrichtung 3 (Fig. 1) die Aussenfläche 212 des Schenkels 21 des Lagerdeckels 2 im Endbereich 210 gegen die Anlagefläche 13 angepresst wird. Man erkennt ausserdem in dieser Darstellung, dass sich die Stützflächen 213 bzw. 15 des Lagerdeckels 2 bzw. der Grundplatte 1 gegeneinander abstützen.

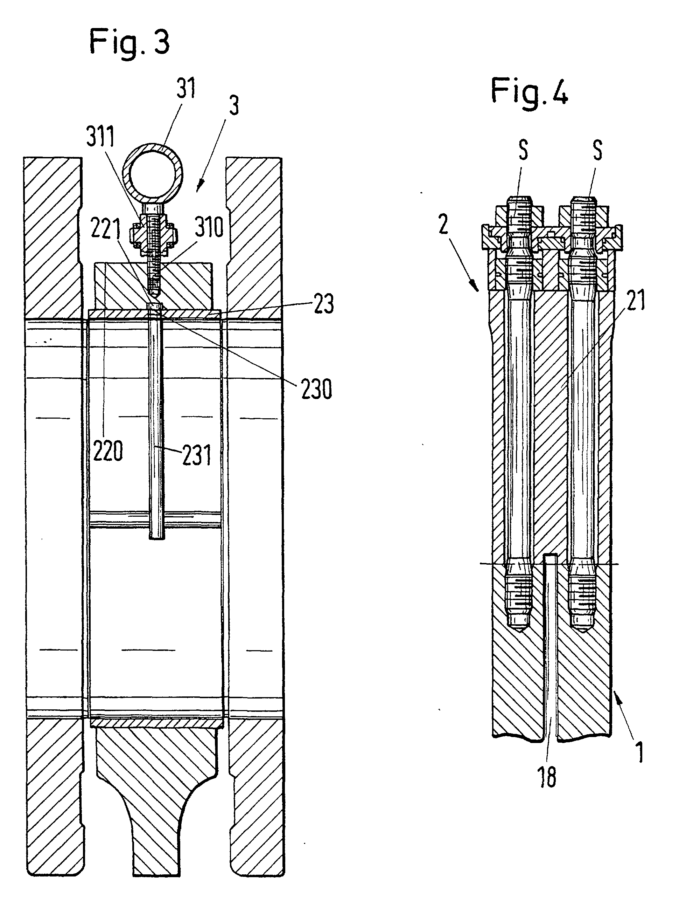

Fig. 3 zeigt einen Schnitt entlang der Linie III-III der Fig. 1. Aus Fig. 3 erkennt man insbesondere, dass die Spannvorrichtung 3 mittels eines Rings 31 betätigt werden kann, der einen Gewinderstift 310 als Fortsatz aufweist. Die Funktionsweise der Spannvorrichtung 3 wird im Zusammenhang mit Fig. 1 und Fig. 3 unmittelbar klar. Dreht man den Ring 31, so bewegt sich der Gewindestift 310 weiter in die Bohrung im Plateau 220 des bogenförmig verlaufenden Stegs 22 hinein oder heraus (je nach Drehrichtung). Ein auf dem Gewindestift 310 angeordneter Körper 311 bewegt sich beim Drehen des Rings 31 mit dem Gewindestift 310 und dem Ring 31 zusammen in Richtung auf das Plateau 220 zu oder davon weg, ohne dass sich der Körper 311 jedoch dabei mitdreht. Je nach Bewegungsrichtung werden dabei die Schenkel 30 der Spannvorrichtung 3 entweder nach aussen gedrückt und drücken dann ihrerseits die Endbereiche 201 bzw. 211 der Schenkel 20 bzw. 21 nach aussen, oder sie werden von diesen Endbereichen 201 bzw. 211 der Schenkel 20 bzw. 21 aufgrund der Vorspannung nach innen gedrückt.

Ferner erkennt man in Fig. 3 (und auch in Fig. 1), dass sowohl im Lagerdeckel 2 als auch in der Lagerfläche der Lagerschale 23 eine Nut 221 bzw. 231 vorgesehen ist, durch welche hindurch Schmieröl zugeführt bzw. weitertransportiert werden kann. Am höchsten Punkt der Lagerschale 23 ist in der Lagerschale 23 eine Durchgangsbohrung 230 vorgesehen, durch welche dann das Schmieröl von der Nut 221 im Lagerdeckel 2 zwischen die Lagerschale 23 und die Kurbelwelle gelangen kann. In der Nut 231 in der Lagerschale kann das Schmieröl dann weitertransportiert werden bzw. es wird von der sich drehenden Kurbelwelle mitgeschleppt.

Zwischen der Kurbelwelle und den Lagerschalen 23 bzw. 17 befindet sich ein Spalt, der von oben her nach unten hin schmaler wird. Durch diese Keilform des Spalts wird ein hoher Druck zwischen der Kurbelwelle und den Lagerschalen aufgebaut, wodurch die hydrodynamische Lagerung der Kurbelwelle bewirkt wird. Damit dies möglich ist, darf die Lagerschale 23 keinesfalls relativ zur Lagerschale 17 nach innen vorstehen. Am besten für die Bildung einer derartigen hydrodynamischen Lagerung ist eine bündige Anordnung der beiden Lagerschalen wie im vorliegenden Fall, also eine runde Lauffläche (vom Prinzip her wäre allenfalls ein geringer Versatz der Lagerschale 23 nach aussen hin relativ zur Lagerschale 17 zulässig, ohne dass die hydrodynamische Lagerung der Kurbelwelle zusammenbricht).

Fig. 4 zeigt einen Schnitt entlang der Linie IV-IV in Fig. 1. Anhand dieses Schnitts erkennt man gut. dass der Lagerdeckel 2 und die Grundplatte 1 auf jeder Seite, hier insbesondere auf der Seite des Schenkels 21, jeweils mit zwei Schrauben S miteinander verbunden sind. Ausserdem erkennt man von unter her kommend einen Kanal 18, durch welchen Schmieröl zugeführt werden kann, welches dann in die Nut 221 im Lagerdeckel gelangt und durch die Öffnung 230 in der Lagerschale 23 an deren höchstem Punkt zwischen die Kurbelwelle und die Lagerschale 23 (siehe hierzu Fig. 1 und Fig. 3).

Fig. 5a und Fig. 5b zeigen, wie die Lagerschale 17 in der Grundplatte 1 vorgespannt bzw. gesichert wird. Dabei erkennt man in Fig. 5a, dass im nicht vorgespannten Zustand die Lagerschale 17 mit der Lagerfläche 17a aus Weissmetall über die Grundplatte 1 nach oben vorsteht, also nach oben hin auf Übermass gefertigt ist. Ähnliches gilt für die Lagerschale 23 im Lagerdeckel 2. Werden nun Lagerdeckel 2 und Grundplatte 1 miteinander verbunden, so werden dabei die Lagerschalen 17 bzw. 23 gegen die Grundplatte 1 bzw. den Lagerdeckel 2 vorgespannt.

Betrachtet man Fig. 5b, so erkennt man, dass mit Hilfe der Schraube N die Lagerschale 17 in ihrer Position gesichert wird. Auf der gegenüberliegenden Seite ist ebenfalls eine entsprechende Schraube N zur Positionierung der Lagerschale 17 vorgesehen. Die Lagerschale 17 ist mittels dieser Schrauben N in ihrer Position gesichert, sodass sie sich relativ zur Grundplatte 1 nicht bewegen kann. Gleiches gilt für die Lagerschale 23 im Lagerdeckel 2. Diese kann aufgrund der Sicherung mittels der Schrauben N beim Abheben des Lagerdeckels 2 (z.B. bei der Inspektion der Lagerschalen) nicht aus dem Lagerdeckel herausfallen. Es ist zu berücksichtigen, dass die Darstellung in Fig. 5a stark übertrieben ist, in Wirklichkeit steht die Lagerschale 17 im nicht vorgespannten Zustand nur geringfügig über den oberen Rand der Vertiefung in der Grundplatte 1 hinaus, d.h. beispielsweise nur einige Zehntel Millimeter.

Fig. 7 und Fig. 8 zeigen jeweils ausschnittsweise Darstellungen, die sich ergeben, wenn man in Fig. 1 die Schnittlinien VII-VII bzw. VIII-VIII verfolgt. In Fig. 7 und Fig. 8 erkennt man besonders gut die Anordnung der Schrauben N zum Positionieren der Lagerschalen 17 und 23 in der Grundplatte 1 bzw. im Lagerdeckel 2. Man erkennt diese Anordnung der Schrauben N auch in Fig. 2. Betrachtet man Fig. 7 näher, so erkennt man ausser den beiden Schrauben N noch ein Positionierungsstift P, welcher die Positionierung der beiden Lagerschalen 17 und 23 relativ zueinander erleichtert. Ausserdem erkennt man noch das Ende der Nut 221 im Lagerdeckel 2 (siehe auch Fig. 3) und in Fig. 8 auch noch das Ende des Kanals 18 (siehe auch Fig. 3), durch den hindurch das Schmieröl zugeführt wird.

## Patentansprüche

1. Lager für eine Kurbelwelle, mit einer in eine Grundplatte (1) eingesetzten Lagerschale (17), und mit einem Lagerdeckel (2), der mindestens zwei Schenkel (20,21) aufweist, welche mit der Grundplatte (1) lösbar verbunden sind, wobei die Schenkel (20,21) seitliche Aussenflächen (202,212) aufweisen und an der Grundplatte (1) seitliche Anlageflächen (12,13) vorgesehen sind, die den seitlichen Aussenflächen (202,212) der Schenkel (20,21) des Lagerdeckels (2) gegenüberliegend angeordnet sind, **dadurch gekennzeichnet, dass** im unmontierten Zustand die Schenkel (20,21) des Lagerdeckels (2) in denjenigen Endbereichen (200,210), welche der Grundplatte (1) zugewandt sind, in Richtung auf die seitlichen Anlageflächen (12,13) der Grundplatte (1) zu vorgespannt sind, sodass im montierten Zustand die seitlichen Aussenflächen (202,212) der Schenkel (20,21) gegen die seitlichen Anlageflächen (12,13) der Grundplatte (1) angepresst sind.

2. Lager nach Anspruch 1, **dadurch gekennzeichnet, dass** in denjenigen Endbereichen (201,211) der Schenkel, welche der Grundplatte (1) abgewandt sind, Aufnahmen (211a) zur Befestigung einer separaten Spannvorrichtung (3) vorgesehen sind, mit welcher die Schenkel (20,21) in diesen Endbereichen (201,211) derart verspannt werden, dass sich die Schenkel in denjenigen Endbereichen (200,210), die der Grundplatte (1) zugewandt sind, aufeinander zu bewegen und dadurch in Richtung auf die seitlichen Anlageflächen (12,13) der Grundplatte (1) zu vorgespannt werden.

3. Lager nach einem der Ansprüche 1 oder 2. **dadurch gekennzeichnet, dass** die Grundplatte (1) seitliche Führungsflächen (10,11) aufweist, an die sich die seitlichen Anlageflächen (12,13) anschliessen, gegen welche die seitlichen Aussenflächen (202,212) der Schenkel (20,21) des Lagerdeckels (2) angepresst sind, und dass die Abmessungen von Lagerdeckel (2) und Grundplatte (1) so gewählt sind, dass im unverspannten Zustand der Abstand der seitlichen Aussenflächen (202,212) der Schenkel (20,21) des Lagerdeckels (2) voneinander geringfügig kleiner ist als der Abstand der seitlichen Führungsflächen (10,11) der Grundplatte (1) voneinander, jedoch geringfügig grösser als der Abstand der seitlichen Anlageflächen (12,13) voneinander.

4. Lager nach einem der Ansprüche 1 bis 3, **dadurch gekennzeichnet, dass** sowohl an denjenigen Enden (200,210) der Schenkel (20,21), die der Grundplatte (1) zugewandt sind, als auch an der Grundplatte (1) Stützflächen (203,213,14,15) ausgebildet sind, und dass die Stützflächen (203,213) der Schenkel (20,21) gegen die Stützflächen (14, 15) der Grundplatte (1) angepresst sind.

5. Lager nach Anspruch 4, **dadurch gekennzeichnet, dass** der Lagerdeckel (2) mittels Schraubverbindungen (S) mit der Grundplatte (1) verbunden ist, wobei sich die Schraubverbindungen (S) von denjenigen Enden (201,211) der Schenkel (20,21), die der Grundplatte (1) abgewandt sind, durch die Schenkel (20,21) und durch die Stützflächen (203,213,14,15) der Schenkel (20,21) und der Grundplatte (1) hindurch bis in die Grundplatte (1) hinein erstrecken.

6. Lager nach einem der vorangehenden Ansprüche, **dadurch gekennzeichnet, dass** sowohl im Lagerdeckel (2) als auch in der Grundplatte (1) eine Lagerschale (23,17) eingesetzt ist, und dass die Lagerschale (23,17) jeweils gegen den Lagerdeckel (2) bzw. gegen die Grundplatte (1) vorgespannt ist.

7. Lager nach einem der Ansprüche 4 bis 6, **dadurch gekennzeichnet, dass** die Stützflächen (203,213, 14, 15) am Lagerdeckel (2) und an der Grundplatte (1) im wesentlichen horizontal verlaufen.

8. Dieselmotor, insbesondere Kreuzkopf-Dieselmotor, mit mindestens einem Lager gemäss einem der vorangehenden Ansprüche.

9. Verfahren zur Montage eines Lagers für eine Kurbelwelle, bei welchem Verfahren in eine Grundplatte (1) eine Lagerschale (17) eingesetzt wird und anschliessend ein Lagerdeckel (2) an die Grundplatte (1) herangeführt und mit dieser verbunden wird, wobei der Lagerdeckel (2) mindestens zwei Schenkel (20,21) aufweist, welche jeweils eine seitliche Aussenfläche (202,212) aufweisen, die beim Heranführen des Lagerdeckels (2) jeweils an einer entsprechenden seitlichen Anlagefläche (12,13) der Grundplatte (1) entlang geführt werden, **dadurch gekennzeichnet, dass** vor dem Heranführen des Lagerdeckels (2) entlang der seitlichen Anlageflächen (12,13) die Schenkel (20,21) des Lagerdeckels (2) in ihren der Grundplatte (1) zugewandten Endbereichen (200,210) in Richtung aufeinander zu verspannt werden, sodass sie in der entgegengesetzten Richtung vorgespannt sind, dass anschliessend der so verspannte Lagerdeckel (2) entlang der seitlichen Anlageflächen (12, 13) der Grundplatte (1) vollständig an die Grundplatte (1) herangeführt wird, dass dann die Verspannung der Schenkel (20,21) wieder gelöst wird, sodass diese in ihren der Grundplatte (1) zugewandten Endbereichen (200,210) aufgrund der Vorspannung gegen die seitlichen Anlageflächen (12,13) der Grundplatte (1) angepresst werden, und dass anschliessend der Lagerdeckel (2) mit der Grundplatte (1) verbunden wird.

10. Verfahren nach Anspruch 9, **dadurch gekennzeichnet, dass** zum Verspannen der Schenkel (20,21) des Lagerdeckels (2) eine separate Spannvorrichtung (3) in den der Grundplatte (1) abgewandten Endbereichen (201,211) der Schenkel (20,21) angebracht wird, dass anschliessend mittels dieser Spannvorrichtung (3) die Schenkel (20,21) in diesen Endbereichen (201,211) in Richtung voneinander weg verspannt werden, also in Richtung aufeinander zu vorgespannt werden, wodurch die Schenkel (20,21) in denjenigen Endbereichen (200,210), die der Grundplatte (1) zugewandt sind, in Richtung aufeinander zu verspannt und somit in entgegengesetzter Richtung vorgespannt werden.

11. Verfahren nach Anspruch 9 oder 10, **dadurch gekennzeichnet, dass** die Abmessungen des Lagerdeckels (2) und der Grundplatte (1) so gewählt sind, dass beim Heranführen des Lagerdeckels (2) von oben an die Grundplatte (1) heran die seitlichen Aussenflächen (202,212) der Schenkel (20,21) zunächst an seitlichen Führungsflächen (10,11) in der Grundplatte (1) entlang geführt werden, bis die Schenkel (20,210) von oben her gegen die enger bemessenen seitlichen Anlageflächen (12,13) der Grundplatte (1) anstossen, dass anschliessend die Schenkel (20,21) so lange verspannt werden, bis sie entlang der seitlichen Anlageflächen (12,13) der Grundplatte (1) gleiten können, bis der Lagerdeckel (2) vollständig an die Grundplatte (1) herangeführt ist, dass dann die Verspannung der Schenkel (20,21) wieder gelöst wird, und dass schliesslich der Lagerdeckel (2) mit der Grundplatte (1) verbunden wird.

12. Verfahren nach einem der Ansprüche 9 bis 11, **dadurch gekennzeichnet, dass** sowohl in die Grundplatte (1) als auch in den Lagerdeckel (2) eine Lagerschale (17,23) eingesetzt wird und dass die jeweilige Lagerschale (17,23) gegen die Grundplatte (1) bzw. gegen den Lagerdeckel (2) vorgespannt wird.

## Claims

1. Bearing for a crankshaft including a bearing shell (17) which is inserted into a base plate (1) and a bearing cover (2) which has at least two limbs (20, 21) which are releasably connected to the base plate (1), with the limbs (20, 21) having lateral outer surfaces (202, 212) and with lateral contact surfaces (12, 13) being provided at the base plate (1) which are disposed opposite to the lateral outer surfaces (202, 212) of the limbs (20, 21) of the bearing cover (2), **characterised in that**, in the disassembled state, the limbs (20, 21) of the bearing cover (2) are pre-stressed in the direction towards the lateral contact surfaces (12, 13) of the base plate (1) in those end regions (200, 210) which face the base plate (1) so that, in the assembled state, the lateral outer surfaces (202, 212) of the limbs (20, 21) are pressed against the lateral contact surfaces (12, 13) of the base plate (1).

2. Bearing in accordance with claim 1 **characterised in that** in those end regions (201, 211) of the limbs which face away from the base plate (1), mounts (211a) are provided for the fastening of a separate stressing device (3) by means of which the limbs (20, 21) can be biased in these end regions (201, 211) in such a manner that the limbs move towards one another in those end regions (200, 210) which face the base plate (1) and are thereby pre-stressed in the direction towards the lateral contact surfaces (12, 13) of the base plate (1).

3. Bearing in accordance with one of the claims 1 or claim 2 **characterised in that** the base plate (1) has lateral guide surfaces (10, 11) which are adjoined by the lateral contact surfaces (12, 13) and against which the lateral outer surfaces (202, 212) of the limbs (20, 21) of the bearing cover (2) are pressed; and **in that** the dimensions of the bearing cover (2) and the base plate (1) are chosen in such a manner that in the unbiased state the distance of the lateral outer surfaces (202, 212) of the limbs (20, 21) of the bearing cover (2) from one another is slightly less than the distance of the lateral guide surfaces (10, 11) of the base plate (1) from one another, but is slightly greater, however, than the distance of the lateral contact surfaces (12, 13) from one another.

4. Bearing in accordance with one of the claims 1 to 3 **characterised in that** support surfaces (203, 213, 14, 15) are formed both at those ends (200, 210) of the limbs (20, 21) which face the base plate (1) and at the base plate (1); and **in that** the support surfaces (203, 213) of the limbs (20, 21) are pressed against the support surfaces (14, 15) of the base plate (1).

5. Bearing in accordance with claim 4 **characterised in that** the bearing cover (2) is connected to the base plate (1) by means of screw connections (S), with the screw connections (S) extending from those ends (201, 211) of the limbs (20, 21) which face away from the base plate (1), through the limbs (20, 21) and through the support surfaces (203, 213, 14, 15) of the limbs (20, 21) and the base plate (1), and into the base plate (1).

6. Bearing in accordance with one of the preceding claims **characterised in that** a bearing shell (23, 17) is inserted both in the bearing cover (2) and in the base plate (1); and **in that** the bearing shells (23, 17) are pre-stressed against the bearing cover (2) and the base plate (1) respectively.

7. Bearing in accordance with one of the claims 4 to 6 **characterised in that** the support surfaces (203, 213, 14, 15) extend substantially horizontally at the bearing cover (2) and at the base plate (1).

8. Diesel engine, in particular a cross-head diesel engine, including at least one bearing in accordance with one of the preceding claims.

9. Method for the assembly of a bearing for a crankshaft, in which method a bearing shell (17) is inserted into a base plate (1) and a bearing cover (2) is subsequently guided toward the base plate (1) and connected to the latter, with the bearing cover (2) having at least two limbs (20, 21) which each have a lateral outer surface (202, 212) which can each be guided along a corresponding lateral contact surface (12, 13) of the base plate (1) when the bearing cover (2) is offered up, **characterised in that** prior to the guiding of the bearing cover (2) along the lateral contact surfaces (12, 13) the limbs (20, 21) of the bearing cover (2) are biased in the direction towards one another in their end regions (200, 210) facing the base plate (1) so that they are pre-stressed in the opposite direction; **in that** the thus biasedbearing cover (2) is subsequently completely offered up to the base plate (1) along the lateral contact surfaces (12, 13) of the base plate (1); **in that** the biasing of the limbs (20, 21) is then released again so that the latter are pressed against the lateral contact surfaces (12, 13) of the base plate (1) in their end regions (200, 210) which face the base plate (1) as a result of the pre-stressing; and **in that** the bearing cover (2) is subsequently connected to the base plate (1).

10. Method in accordance with claim 9 **characterised in that** a separate stressing device (3) is provided in the end regions (201, 211) of the limbs (20, 21) which face away from the base plate (1) for the biasing of the limbs (20, 21) of the bearing cover (2); and **in that** the limbs (20, 21) are subsequently pre-stressed in these end regions (201, 211) in the direction away from one another, that is, biased in the direction towards one another, by means of this stressing device (3), through which the limbs (20, 21) are clamped in the direction towards one another in those end regions (200, 210) which face the base plate (1) and are thus pre-stressed in the opposite direction.

11. Method in accordance with claim 9 or claim 10 **characterised in that** the dimensions of the bearing cover (2) and of the base plate (1) are chosen in such a manner that, when the bearing cover (2) is being guided from above towards the base plate (1) the lateral outer surfaces (202, 212) of the limbs (20, 21) are first guided along lateral guide surfaces (10, 11) in the base plate (1) until the limbs (20, 21) strike from above against the more narrowly dimensioned lateral contact surfaces (12, 13) of the base plate (1); **in that** the limbs (20, 21) are subsequently biased for so long that they can slide along the lateral contact surfaces (12, 13) of the base plate (1) until the bearing cover (2) has been completely guided on to the base plate (1); **in that** the biasing of the limbs (20, 21) is then released; and **in that** finally the bearing cover (2) is connected to the base plate (1).

12. Method in accordance with one of the claims 9 to 11 **characterised in that** a bearing shell (17, 23) is inserted both into the base plate (1) and into the bearing cover (2); and **in that** the bearing shells (17, 23) are pre-stressed towards the base plate (1) and against the bearing cover (2) respectively.

## Revendications

1. Palier pour un vilebrequin, avec une coque de palier (17) placée dans une plaque de base (1), et avec un chapeau de palier (2) qui présente au moins deux branches (20, 21) qui sont reliées relâchablement à la plaque de base (1), où les branches (20, 21) présentent des faces extérieures latérales (201, 212) et où sont prévues à la plaque de base (1) des faces d'application latérales (12, 13) qui sont disposées en face des faces extérieures latérales (202, 212) des branches (20, 21) du chapeau de palier (2), **caractérisé en ce qu'**à l'état non monté, les branches (20, 21) du chapeau de palier (2) sont précontraintes dans les zones d'extrémité (200, 210), qui sont orientées vers la plaque de base (1), en direction des faces d'application latérales (12, 13) de la plaque de base (1) de telle sorte qu'à l'état monté, les faces extérieures latérales (202, 212) des branches (20, 21) s'appliquent contre les faces d'application latérales (12, 13) de la plaque de base (1).

2. Palier selon la revendication 1, **caractérisé en ce que** dans les zones d'extrémité (201, 211) des branches, qui sont éloignées de la plaque de base (1), des logements (211a) sont prévus pour la fixation d'un dispositif de mise en tension séparé (3) au moyen duquel les branches (20, 21) sont mises en tension dans ces zones d'extrémité (201, 211) de telle sorte que les branches, dans les zones d'extrémité (200, 210) orientées vers la plaque de base (1) s'approchent l'une de l'autre et sont ainsi précontraintes en direction des faces d'application latérales (12, 13) de la plaque de base (1).

3. Palier selon l'une des revendications 1 ou 2, **caractérisé en ce que** la plaque de base (1) présente des faces de guidage latérales (10, 11), à laquelle font suite les faces d'application latérales (12, 13) contre lesquelles sont poussées les faces d'application latérales (202, 212) des branches (20, 21) du chapeau de palier (2), et **en ce que** les dimensions du chapeau de palier (2) et de la plaque de base (1) sont sélectionnées de façon qu'à l'état non contraint, l'écart des faces extérieures latérales (202, 212) des branches (20, 21) du chapeau de palier (1) l'une de l'autre est légèrement plus petit que l'écart des faces de guidage latérales (10, 11) de la plaque de base (1) l'une de l'autre, cependant légèrement plus grand que l'écart des faces d'application latérales (12, 13) l'une de l'autre.

4. Palier selon l'une des revendications 1 à 3, **caractérisé en ce que** des faces d'appui (203, 213, 14, 15) sont réalisées à la fois aux extrémités (200, 210) des branches (20, 21) qui sont orientées vers la plaque de base (1) et aussi à la plaque de base (1), et **en ce que** les faces d'appui (203, 213) des branches (20, 21) sont appliquées aux faces d'appui (14, 15) de la plaque de base (1).

5. Palier selon la revendication 4, **caractérisé en ce que** le chapeau de palier (2) est relié par des vissages (S) à la plaque de base (1), où les vissages (S) des extrémités (201, 211) des branches (20, 21) éloignées de la plaque de base (1) s'étendent à travers les branches (20, 21) et à travers les faces d'appui (203, 213, 14, 15) des branches (20, 21) et de la plaque de base (1) jusque dans la plaque de base (1).

6. Palier selon l'une des revendications précédentes, **caractérisé en ce qu'**il est placé à la fois dans le chapeau de palier (2) et aussi dans la plaque de base (1) une coque de palier (23, 17), et **en ce que** la coque de palier (23, 17) est précontrainte respectivement contre le chapeau de palier (2) respectivement contre la plaque de base (1).

7. Palier selon l'une des revendications 4 à 6, **caractérisé en ce que** les faces d'appui (203, 213, 14, 15) au chapeau de palier (2) et à la plaque de base (1) s'étendent sensiblement horizontalement.

8. Moteur Diesel, en particulier moteur Diesel à crosse, avec au moins un palier selon l'une des revendications précédentes.

9. Procédé de montage d'un palier pour un vilebrequin, procédé dans lequel une coque de palier (17) est placée dans une plaque de base (1) et ensuite, un chapeau de palier (2) est amené à la plaque de base (1) et est assemblé avec celle-ci, où le chapeau de palier (2) présente au moins deux branches (20, 21) qui présentent chacune une face extérieure latérale (202, 212) qui, lors de l'amenée du chapeau de palier (2) sont guidées respectivement le long d'une face d'application latérale correspondante (12, 13) de la plaque de base (1), **caractérisé en ce qu'**avant l'amenée du chapeau de palier (2) le long des faces d'application latérales (12, 13), les branches (20, 21) du chapeau de palier (2) sont mises en tension dans leurs zones d'extrémité (200, 210) orientées vers la plaque de base (1) d'une vers l'autre de sorte qu'elles sont précontraintes dans la direction opposée, qu'ensuite le chapeau de palier (2) ainsi mis en tension est amené le long des faces d'application latérales (12, 13) de la plaque de base (1) complètement à la plaque de base (1), qu'ensuite la contrainte des branches (20, 21) est de nouveau relâchée de sorte que celles-ci, dans leurs zones d'extrémité (200, 210) orientées vers la plaque de base (1), du fait de la précontrainte, sont appliquées aux faces d'application latérales (12, 13) de la plaque de base (1), et qu'ensuite le chapeau de palier (2) est assemblé avec la plaque de base (1).

10. Procédé selon la revendication 9, **caractérisé en ce que** pour la mise en tension des branches (20, 21) du chapeau de palier (2), un dispositif de mise en tension séparé (3) est installé dans les zones d'extrémité (201, 211) des branches (20, 21) éloignées de la plaque de base (1), qu'ensuite au moyen de ce dispositif de mise en tension (3), les branches (20, 21) sont contraintes dans ces zones d'extrémité (201, 211) l'une au loin de l'autre, sont donc précontraintes l'une en direction de l'autre, par quoi les branches (20, 21), dans les zones d'extrémité (200, 210) orientées vers la plaque de base (1), sont contraintes en direction l'une vers l'autre et sont donc précontraintes dans la direction opposée.

11. Procédé selon la revendication 9 ou 10, **caractérisé en ce que** les dimensions du chapeau de palier (2) et de la plaque de base (1) sont sélectionnées de façon que lors de l'amenée du chapeau de palier (2) depuis au-dessus à la plaque de base (1), les faces extérieures latérales (202, 212) des branches (20, 21) sont guidées d'abord le long des faces de guidage latérales (10, 11) dans la plaque de base (1) jusqu'à ce que les branches (20, 210) butent depuis au-dessus contre les faces d'application latérales (12, 13) plus étroites de la plaque de base (1), qu'ensuite les branches (20, 21) sont contraintes aussi longtemps jusqu'à ce qu'elles puissent coulisser le long des faces d'application latérales (12, 13) de la plaque de base (1), jusqu'à ce que le chapeau de palier (2) soit amené complètement à la plaque de base (1), et qu'ensuite la contrainte des branches (20, 21) est de nouveau relâchée et qu'enfin le chapeau de palier (2) est assemblé avec la plaque de base (1).

12. Procédé selon l'une des revendications 9 à 11, **caractérisé en ce qu'**une coque de palier (17, 23) est placée à la fois dans la plaque de base (1) et aussi dans le chapeau de palier (2), et **en ce que** la coque de palier respective (17, 23) est précontrainte contre la plaque de base (1) respectivement contre le chapeau de palier (2).
